Europäisches Patentamt

European Patent Office

Office européen des brevets

(11) Veröffentlichungsnummer : **0 094 377**
**B1**

(12) **EUROPÄISCHE PATENTSCHRIFT**

(45) Veröffentlichungstag der Patentschrift :
18.09.85

(51) Int. Cl.⁴ : **A 47 B 13/00**

(21) Anmeldenummer : **83890078.5**

(22) Anmeldetag : **10.05.83**

(54) Einrichtung zum raschen Einstellen der gegenseitigen Lage zweier Teile, insbesondere für Büromöbel.

(30) Priorität : 11.05.82 AT 1848/82

(43) Veröffentlichungstag der Anmeldung :
16.11.83 Patentblatt 83/46

(45) Bekanntmachung des Hinweises auf die Patenterteilung : 18.09.85 Patentblatt 85/38

(84) Benannte Vertragsstaaten :
BE CH DE FR GB IT LI LU NL SE

(56) Entgegenhaltungen :
DE-B- 1 264 709

(73) Patentinhaber : SVOBODA ENTWICKLUNGS KG
Bretschneiderstrasse
A-3100 St. Pölten (AT)

(72) Erfinder : Svoboda, Rudolf, Dipl.-Ing.
Ottokar Kernstock-Strasse 17
A-3100 St. Pölten (AT)

(74) Vertreter : Krause, Ernst, Dipl.-Ing. et al
Krause, Ernst, Dipl.-Ing. Casati, Wilhelm, Dipl.-Ing
P.O. Box 234 Amerlingstrasse 8
A-1061 Wien VI (AT)

## Beschreibung

Die Erfindung bezieht sich auf eine Einrichtung zum raschen Einstellen der gegenseitigen Lage zweier Teile, insbesonders für Büromöbel und solcher Teile, bei denen der eine Teil belastet ist und der andere Teil die Last abstützt, wobei zur Einstellung mindestens ein an einem der beiden Teile drehbar gelagerter Verstellexzenter vorgesehen ist, dessen äußere Kurvenflächen sich gegen den anderen der beiden Teile abstützen.

Eine solche Anordnung ist aus der DE-B-12 64 709 für eine Höhenausgleichseinrichtung an Möbelfüßen bekannt. Als Verstellexzenter ist dabei eine um einen waagrechten Bolzen exzentrisch gelagerte, drehbare Scheibe vorgesehen, die auf ein zwischen ihr und dem Fußboden angeordnetes, vertikal bewegliches Zwischenstück einwirkt. Eine Sicherung, damit die Möbelteile in der gegenseitig eingestellten Lage selbsttätig verbleiben, ist dabei nicht vorgesehen.

Der Erfindung liegt die Aufgabe zugrunde, eine Einrichtung der eingangs genannten Art zu schaffen, mittels welcher die Möbelteile der jeweils eingestellten Lage auch bei Belastung selbsttätig und sicher verbleiben.

Erfindungsgemäß wird diese Aufgabe dadurch gelöst, daß an der den Verstellexzenter tragenden Welle ein oder mehrere Bremsorgane angreifen. Eine derartige Ausbildung hat den Vorteil, daß die Einrichtung auch bei Auftreten größerer Rückstellkräfte die gegeneinander verstellten Teile in der gewünschten Lage hält.

Vorteilhafterweise können an der bzw. den die Verstellexzenter tragenden Welle ein oder mehrere Bremsorgane angreifen, es können dann auch solche Exzenter angewendet werden, die infolge eines größeren Einstellbereiches nur noch bedingt selbsthemmend sind.

Bei einer besonders einfachen Ausbildung kann das Bremsorgan durch eine an den Verstellexzenter tragende Welle anpreßbare Federplatte gebildet sein. Zur Erhöhung der Bremswirkung kann an der Federplatte im Bereich von deren Anlage an die die Verstellexzenter tragende Welle ein Bremsbelag vorgesehen sein, wodurch zusätzlich erreicht ist, daß die Bremwirkung auch über lange Zeiträume gleich bleibt.

Um das Auffinden vorgewählter Stellungen zu erleichtern und auch um bei größeren Belastungen die vorgewählte Stellung zuverlässig beibehalten zu können, kann die den Verstellexzenter tragende Welle im Bereich der Federplatte polygonalen Querschnitt aufweisen. Es kann aber die den Verstellexzenter tragende Welle im Bereich der Anlage der Federplatte auch noch weitere Exzenter aufweisen, deren Exzentrizität entgegengesetzt zu jener des Verstellexzenters gerichtet ·ist, wodurch erreicht wird, daß bei Erhöhung des Rückstellmomentes der den anderen Möbelteil abstützenden Verstellexzenter die Bremskraft durch stärkere Anpressung der Bremsplatten an die den Verstellexzenter tragende Welle mittels der weiteren Exzenter erhöht wird.

Weiters kann die Anpreßkraft des Bremsorganes an die den Verstellexzenter tragende Welle einstellbar sein, wodurch die Bremskraft je nach der zu tragenden Last regelbar ist. Bei einer besonders einfachen Ausbildung kann zur Einstellung der Anpreßkraft des Bremsorgans bzw. der Bremsorgane an dem den Verstellexzenter lagernden Teil angeordnete Einstellschrauben vorgesehen sein. Die den Verstellexzenter tragende Welle kann dabei an einer Grundplatte gelagert sein, an der gleichzeitig auch eine verstellbare Tragplatte, z. B. für ein elektronisches Gerät od. dgl. schwenkbar angelenkt ist, wobei sich die äußeren Kurvenflächen der Verstellexzenter gegen die verstellbare Tragplatte abstützen.

Der Erfindungsgegenstand wird nachstehend anhand in der Zeichnung dargestellter Ausführungsbeispiele für ein den Bildschirm eines Computerterminals tragenden Auflage beschrieben.

Figur 1 zeigt einen Aufrißschnitt durch eine erste Ausführungsvariante.

Figur 2 gibt einen Aufrißschnitt durch eine zweite Ausführungsform wieder.

Figur 3 ist eine Detaildarstellung der Bremseinrichtung gemäß Figur 2.

Figur 4 veranschaulicht eine der Figur 3 analoge Detaildarstellung einer weiteren Ausführungsvariante.

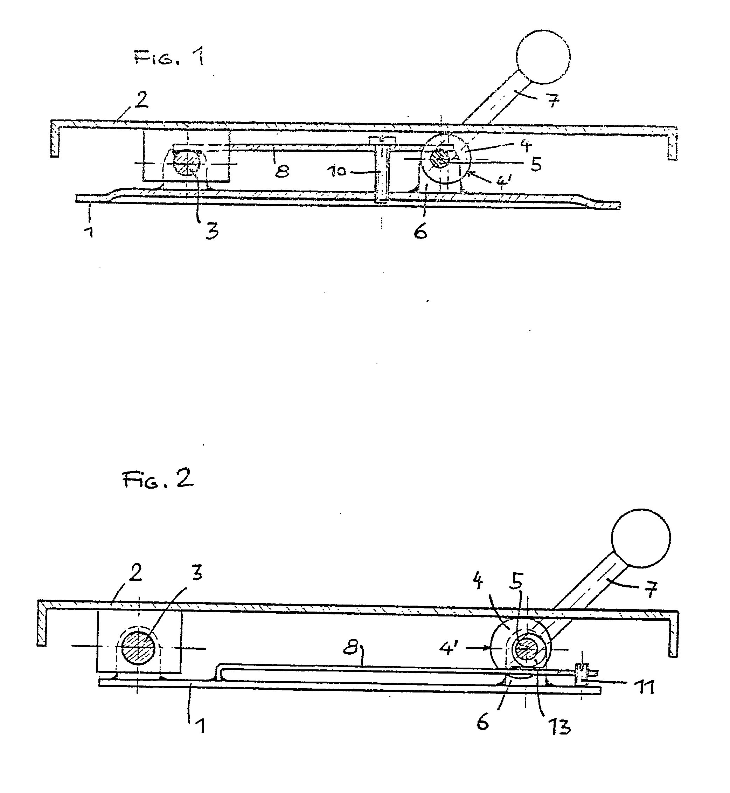

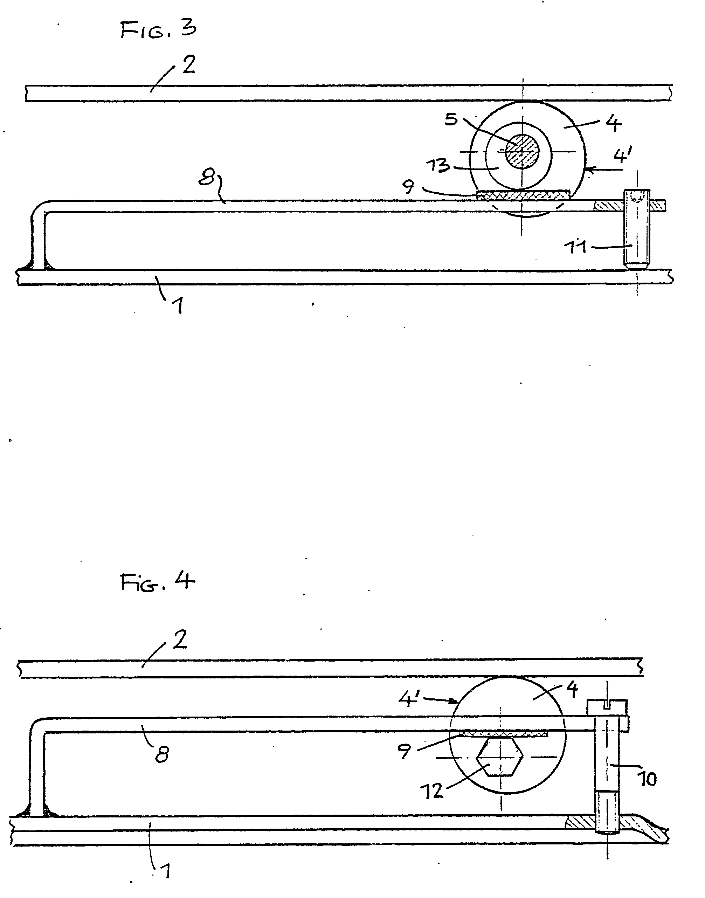

Mit 1 ist eine Grundplatte bezeichnet, an welcher eine verstellbare Tragplatte 2 über eine Achse 3 schwenkbar gelagert ist. Die verstellbare Tragplatte 2 ist gegenüber der Grundplatte 1 mittels eines oder mehrerer koaxial angeordneter Verstellexzenter 4 verschwenkbar, welche über eine Welle 5 in an der Grundplatte 1 vorgesehenen Lagern 6 drehbar gelagert sind, wobei die Verdrehung der Welle 5 über einen Handhebel 7 bewirkbar ist. Die Verstellexzenter 4 stützen sich dabei an der verstellbaren Tragplatte über ihre äußere Kurvenfläche 4' ab. Mit 8 ist eine ein Bremsorgan bildende Federplatte bezeichnet, welche mit der Grundplatte 1 entweder über die die verstellbare Tragplatte 2 an der Grundplatte 1 lagernde Achse 3 (Figur 1) oder direkt (Figur 2 bis 4) verbunden ist. An der Federplatte 8 ist im Bereich ihrer Anlage an der die Verstellexzenter 4 tragenden Welle 5 ein Bremsbelag 9 angebracht. Gemäß den Ausführungsbeispielen nach den Figur 1 und 4 ist die Federplatte 8 über Zugschrauben 10 von oben her gegen die Welle 5 preßbar, wogegen bei den Ausführungsformen nach den Figur 2 und 3 die Federplatte 8 durch Druckschrauben 11 von unten her gegen die Welle 5 preßbar ist.

Beim Ausführungsbeispiel gemäß Figur 4 weist die die Verstellexzenter 4 tragende Welle im Bereich der Anlage der Federplatte 8 polygonalen Querschnitt 12 auf. Dies bewirkt, daß der Verdrehung des Verstellexzenters 4 durch das Durchbewegen einer der Kanten der polygonalen Welle unter der angepreßten Federplatte 8 ein größerer Widerstand entgegengesetzt wird, als dies bei einer runden Welle 5 der Fall ist, da sich die Entfernung der Federplatte 8 von der Achse der Welle und damit das Widerstandsmoment entsprechend der Drehung ändert. Dazu muß allerdings angeführt werden, daß für normale Belastungen die Ausbildung gemäß Figur 4 vollkommen ausreichend ist.

Gemäß dem Ausführungsbeispiel nach den Figur 2 und 3 ist auf der die Verstellexzenter 4 tragenden Welle 5 noch ein weiterer Exzenter 13 angeordnet, welcher mit seiner äußeren Kurvenfläche an der Federplatte 8 anliegt, wobei die Exzentrizität des weiteren Exzenters 13 entgegengesetzt zu jener der Verstellexzenter gerichtet ist. Damit steht bei steiler gestelltem Verstellexzenter 4 auch der auf die Federplatte 8 drückende Exzenter 13 steiler, womit eine stärkere Bremswirkung erzielt wird, da der Exzenter 13 einen stärkeren Anpreßdruck auf die Federplatte 8 ausübt.

Entlang der Welle 5 können mehrere Federplatten 8 angreifen, wobei demgemäß dann bei der Ausführung gemäß den Figur 2 und 3 auch ebensoviele Exzenter 13 an der Welle 5 vorgesehen sind.

Zur Bremsung der die Verstellexzenter 4 tragenden Welle 5 könnte auch in nicht dargestellter Weise eine Außenbandbremse angeordnet sein, welche die Welle 5 gegebenenfalls über ein Schleifrad umschlingt, wodurch die Bremsung der Welle 5 vorwiegend nur in einer Drehung bewirkt wird, was dann ein Heben der verstellbaren Tragplatte 2 ungebremst zuläßt, ein Absenken derselben jedoch entsprechend bremst. Weiters könnte in gleichfalls nicht dargestellter Weise die Verdrehung der Welle 5 über einen gegebenenfalls mehrgängigen, selbsthemmenden Schneckentrieb erfolgen, was insbesondere dann von Vorteil sein kann, wenn von der verstellbaren Tragplatte sehr schwere Geräte aufzunehmen sind.

## Patentansprüche

1. Einrichtung zum raschen Einstellen der gegenseitigen Lage zweier Teile (1, 2), insbesondere für Büromöbel und solcher Teile, bei denen der eine Teil belastet ist und der andere Teil die Last abstützt, wobei zur Einstellung mindestens ein an einem der beiden Teile drehbar gelagerter Verstellexzenter (4) vorgesehen ist, dessen äußere Kurvenflächen sich gegen den anderen der beiden Teile abstützen, dadurch gekennzeichnet, daß an der den Verstellexzenter (4) tragenden Welle (5) ein oder mehrere Bremsorgane (8) angreifen.

2. Einrichtung nach Anspruch 1, dadurch gekennzeichnet, daß das Bremsorgan durch eine an die den Verstellexzenter (4) tragende Welle (5) anpreßbare Federplatte (8) gebildet ist.

3. Einrichtung nach Anspruch 1 oder 2, dadurch gekennzeichnet, daß an der die Federplatte (8) im Bereich von deren Anlage an die den Verstellexzenter (4) tragende Welle (5) ein Bremsbelag (9) vorgesehen ist.

4. Einrichtung nach einem der Ansprüche 1 bis 3, dadurch gekennzeichnet, daß die den Verstellexzenter (4) tragende Welle (5) im Bereich der Federplatte (8) polygonalen Querschnitt (12) aufweist (Figur 4).

5. Einrichtung nach einem der Ansprüche 1 bis 3, dadurch gekennzeichnet, daß die den Verstellexzenter (4) tragende Welle (5) im Bereich der Anlage der Federplatte (8) weitere Exzenter (13) aufweist, deren Exzentrizität entgegengesetzt zu jener des Verstellexzenters (4) gerichtet ist (Figuren 2, 3).

6. Einrichtung nach einem der Ansprüche 1 bis 5, dadurch gekennzeichnet, daß die Anpreßkraft des Bremsorgans (8) an die den Verstellexzenter (4) tragende Welle (5) einstellbar ist.

7. Einrichtung nach Anspruch 6, dadurch gekennzeichnet, daß zur Einstellung der Anpreßkraft des Bremsorgans (8) eine an dem die Verstellexzenter (4) lagernden Teil (1) angeordnete Einstellschraube (10, 11) vorgesehen ist.

8. Einrichtung nach einem der Ansprüche 1 bis 7, dadurch gekennzeichnet, daß die die Verstellexzenter (4) tragende Welle (5) an einer Grundplatte (1) gelagert ist, an der gleichzeitig auch eine verstellbare Tragplatte (2), z. B. für ein elektronisches Gerät od. dgl., schwenkbar angelenkt ist, wobei sich die äußere Kurvenfläche (4') des Verstellexzenters (4) gegen die verstellbare Tragplatte (2) abstützt.

## Claims

1. A device for effecting a quick adjustment of the relative position of two parts (1, 2), particularly for use with office furniture and with parts consisting of one part to which a load is applied and another part for supporting the load, wherein at least one adjusting eccentric (4) for effecting the adjustment is rotatably mounted on one of the two parts and has curved outer surfaces bearing on the other of the two parts, characterized in that one or more braking members (8) engage the shaft (5) which carries the adjusting eccentric (4).

2. A device according to claim 1, characterized in that the braking member consists of a spring plate (8), which is adapted to be forced against the shaft (5) carrying the adjustable eccentric (4).

3. A device according to claim 1 or 2, characterized in that a brake lining (9) is provided on the spring plate (8) in that region in which it engages the shaft (5) carrying the adjusting eccentric.

4. A device according to any of claims 1 to 3, characterized in that the shaft (5) carrying the adjusting eccentric (4) has a polygonal cross-section adjacent to the spring plate (8).

5. A device according to any of claims 1 to 3, characterized in that the shaft (5) carrying the adjusting eccentric (4) is provided with additional eccentrics (13) in the region engaged by the spring plate (8) and said additional eccentrics have an eccentricity which is opposite to that of the adjusting eccentric (4) (Figures 2, 3).

6. A device according to any of claims 1 to 5, characterized in that the pressure force exerted by the braking member (8) on the shaft (5) carrying the adjusting eccentric (4) is variable.

7. A device according to claim 6, characterized in that an adjusting screw (10, 11) is mounted in that part (1) on which the adjusting eccentrics (4) are movably mounted and said adjusting screw serves to adjust the pressure force exerted by the braking member (8).

8. A device according to any of claims 1 to 7, characterized in that the shaft (5) carrying the adjusting eccentrics (4) is movably mounted on a base plate (1), to which an adjustable carrying plate (2), e. g., for an electronic device or the like, which is pivoted to said carrying plate, and the outer curved surface (4') of the adjusting eccentric (4) bears on the adjustable carrying plate (2).

## Revendications

1. Dispositif de réglage rapide de la position réciproque de deux éléments (1, 2), spécialement pour meuble de bureau et éléments dont l'un est chargé tandis que l'autre supporte la charge, un excentrique de réglage (4) disposé de façon pivotable sur l'un des deux éléments et dont la surface courbe extérieure repose sur l'autre élément étant prévu pour le réglage d'au moins l'un des éléments caractérisé en ce que un ou plusieurs organes de freinage (8) attaquent l'arbre (5) portant l'excentrique de réglage (4).

2. Dispositif selon la revendication 1, caractérisé en ce que l'organe de freinage est une plaque ressort comprimable sur l'arbre (5) portant l'excentrique de réglage (4).

3. Dispositif selon la revendication 1 ou la revendication 2, caractérisé en ce qu'une garniture de frein est prévue sur la plaque ressort (8), dans la zone de son placement sur l'arbre (5) portant l'excentrique de réglage (4).

4. Dispositif selon l'une des revendications 1 à 3, caractérisé en ce que l'arbre (5) portant l'excentrique de réglage (4) présente, dans la zone de la plaque ressort (8) une section polygonale.

5. Dispositif selon l'une des revendications 1 à 3, caractérisé en ce que l'arbre (5) portant l'excentrique de réglage (4) présente, dans la zone du placement de la plaque ressort (8) un autre excentrique (13) dont l'excentricité est opposée à celle de l'excentrique de réglage (4) (figures 2, 3).

6. Dispositif selon l'une des revendications 1 à 5, caractérisé en ce que la face de compression de l'organe de freinage (8) sur l'arbre portant l'excentrique de réglage (4) est réglable.

7. Dispositif selon la revendication 6, caractérisé en ce qu'une vis de réglage disposée sur l'élément (1) portant l'excentrique de réglage (4) est prévue pour assurer le réglage de la force de compression, de l'organe de freinage.

8. Dispositif selon l'une des revendications 1 à 7, caractérisé en ce que l'arbre (5) portant l'excentrique de réglage (4) est monté sur une plaque de base (1), à laquelle est simultanément articulée de façon pivotante une plaque support réglable (2) par exemple pour un appareil électronique ou similaire, la surface courbe extérieure (4') de l'excentrique de réglage (4) reposant contre la plaque support réglable (2).

FIG. 1

FIG. 2

FIG. 3

FIG. 4